# EUROPEAN PATENT SPECIFICATION

(11) **EP 3 116 045 B1**
(45) Date of publication and mention of the grant of the patent: **25.07.2018**
(21) Application number: 15757816.2
(22) Date of filing: 23.02.2015
(51) Int. Cl.: H01M 2/26, H01M 2/30, H01M 2/10, H01M 2/20, H01M 2/02

(54) **ELECTRICITY STORAGE MODULE**
STROMSPEICHERMODUL
MODULE D'ACCUMULATION D'ÉLECTRICITÉ

(30) Priority: 04.03.2014 JP 2014041430
(43) Date of publication of application: 11.01.2017
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: SHIMIZU, Hiroshi, Yokkaichi-shi Mie 510-8503 (JP); HIRAMITSU, Hiroomi, Yokkaichi-shi Mie 510-8503 (JP)
(74) Representative: Müller-Boré & Partner Patentanwälte PartG mbB
(86) International application number: PCT/JP2015/054988
(87) International publication number: WO 2015/133309

(56) References cited:
- EP-A1- 2 579 354
- WO-A1-2011/152219
- JP-A- 2007 073 510
- JP-A- 2010 287 568
- JP-A- 2013 037 914
- JP-A- 2013 037 914
- JP-A- 2013 105 698
- JP-A- 2013 105 698
- JP-A- 2014 022 239
- US-A1- 2012 040 234
- US-A1- 2013 216 878

## Description

### Technical Field

The present invention relates to an electricity storage module.

### Background Art

A battery pack in which a necessary number of battery modules each accommodating a predetermined number of unit cells in a case are connected by connecting members may be mounted in a vehicle such as an electric vehicle or a hybrid vehicle (see, for example, patent literature 1).

### Citation List

### Patent Literature

Patent Literature 1: Japanese Unexamined Patent Publication No. 2013-186995

US 2013/216878 A1 discloses a battery cell interconnect and voltage sensing assembly. The assembly includes a frame member having a rectangular ring-shaped peripheral wall with first, second, third and fourth wall portions. The frame member further includes a central plate portion. The assembly further includes an electrical interconnect member electrically that is coupled to an electrical terminal of a battery cell. The electrical interconnect member has a tab that extends through an aperture in the central plate portion. The assembly further includes a circuit board and an encapsulation portion that is bonded to and covers a side of the circuit board.

JP 2013 037914 A discloses a battery module. The battery module is configured so that a cell including a positive electrode, a negative electrode, and a laminate film is housed in a case, and the cell is brought into conduction with an external apparatus of the case by means of a connector.

EP 2 579 354 A1 discloses a battery. Within an outer cover member of a laminated film including a resin layer, there is installed an electricity generating element thereby to constitute a battery body, a peripheral portion of the outer cover member being sealed.

JP 2013 105698 A discloses a power supply device which comprises a battery assembly including stacked battery cells.

### Summary of the Invention

### Technical Problem

If the number of battery modules mounted in a vehicle or the like increases, a connecting operation of connecting between the battery modules becomes cumbersome. Further, there has been a problem of reducing a mounting space if the number of the battery modules is large since a thickness of the case is accumulated for each battery module.

The present invention was developed to solve the above problem and aims to provide an electricity storage module with a reduced space and a simplified connecting operation.

### Solution to Problem

The present invention is directed to an electricity storage module according to claim 1.

In the present invention, the connecting member for connecting the lead terminals of the electricity storage elements adjacent in the lamination direction is held on the connecting member holding portion of the holding member mounted on the one side edge of the electricity storage element. Thus, according to the present invention, the electricity storage module is obtained by laminating the electricity storage elements each mounted with the holding member and connecting the lead terminals of the electricity storage elements
and the connecting members such as by welding, wherefore a connecting operation can be simplified.

Further, according to the present invention, one electricity storage module can be configured by laminating a necessary number of electricity storage elements. Thus, one case can accommodate this electricity storage module and a mounting space can be reduced because the number of cases is smaller than an electricity storage module in which electricity storage elements are accommodated in a plurality of cases.

The present invention may also be configured as follows.

A part of the connecting member to be held in contact with the lead terminal may be made of the same material as the lead terminal. According to this configuration, various welding methods can be adopted as a method for connecting the lead terminal and the connecting member. Further, electrical connection reliability can be enhanced by suppressing the occurrence of electrolytic corrosion in a connecting part of the lead terminal and the connecting member.

### Effects of the Invention

According to the present invention, it is possible to provide an electricity storage module with a reduced space and a simplified connecting operation.

### Brief Description of the Drawings

FIG. 1 is a perspective view of an electricity storage module of one embodiment,
FIG. 2 is a perspective view of the electricity storage module with a connector housing removed,
FIG. 3 is a perspective view of the electricity storage module with a holding member cover removed,
FIG. 4 is a perspective view of a laminated body,
FIG. 5 is a partial perspective view of the laminated body,
FIG. 6 is a partial section of the laminated body,
FIG. 7 is a perspective view of an electricity storage element,
FIG. 8 is a perspective view of a holding member with an external connecting member in a lowermost stage,
FIG. 9 is a plan view of the holding member with the external connecting member in the lowermost stage,
FIG. 10 is a perspective view of the holding member in the lowermost stage,
FIG. 11 is a plan view of the holding member in the lowermost stage,
FIG. 12 is a perspective view of the external connecting member (lowermost stage),
FIG. 13 is a plan view of the external connecting member (lowermost stage),
FIG. 14 is a perspective view of a holding member with a connecting member in a second lowest stage,
FIG. 15 is a plan view of the holding member with the connecting member in the second lowest stage,
FIG. 16 is a perspective view of a holding member with a connecting member in a third lowest stage,
FIG. 17 is a plan view of the holding member with the connecting member in the third lowest stage,
FIG. 18 is a perspective view of the holding members in middle stages (in the second and third lowest stages),
FIG. 19 is a plan view of the holding members in the middle stages (in the second and third lowest stages),
FIG. 20 is a perspective view of the connecting member in the second lowest stage,
FIG. 21 is a perspective view of the connecting member in the third lowest stage,
FIG. 22 is a partial perspective view of a holding member with an external connecting member in an uppermost stage,
FIG. 23 is a perspective view of the holding member in the uppermost stage,
FIG. 24 is a plan view of the holding member in the uppermost stage,
FIG. 25 is a perspective view of the external connecting member (uppermost stage),
FIG. 26 is a plan view of the external connecting member (uppermost stage),
FIG. 27 is a perspective view showing an electricity storage unit formed by mounting the external connecting member and the electricity storage element on the holding member in the lowermost stage,
FIG. 28 is a plan view showing the electricity storage unit formed by mounting the external connecting member and the electricity storage element on the holding member in the lowermost stage,
FIG. 29 is a perspective view showing a state where the holding member with the connecting member in the second lowest stage is laminated on the electricity storage unit in the lowermost stage,
FIG. 30 is a plan view showing the state where the holding member with the connecting member in the second lowest stage is laminated on the electricity storage unit in the lowermost stage,
FIG. 31 is a perspective view showing a state where the electricity storage element is mounted on the holding member in the second lowest stage and the electricity storage units are laminated in two stages,
FIG. 32 is a plan view showing the state where the electricity storage element is mounted on the holding member in the second lowest stage and the electricity storage units are laminated in two stages,
FIG. 33 is a perspective view showing a state where the holding member with the connecting member in the third lowest stage is laminated on the electricity storage unit in the second lowest stage,
FIG. 34 is a plan view showing the state where the holding member with the connecting member in the third lowest stage is laminated on the electricity storage unit in the second lowest stage,
FIG. 35 is a perspective view showing a state where the electricity storage element is mounted on the holding member in the third lowest stage and the electricity storage units are laminated in three stages,
FIG. 36 is a plan view showing a state where the electricity storage element is mounted on the holding member in the third lowest stage and the electricity storage units are laminated in three stages, and
FIG. 37 is a perspective view showing a state where the holding member with the external connecting member in the uppermost stage is laminated on the electricity storage unit in the third lowest stage.

### Embodiment of the Invention

### <Embodiment>

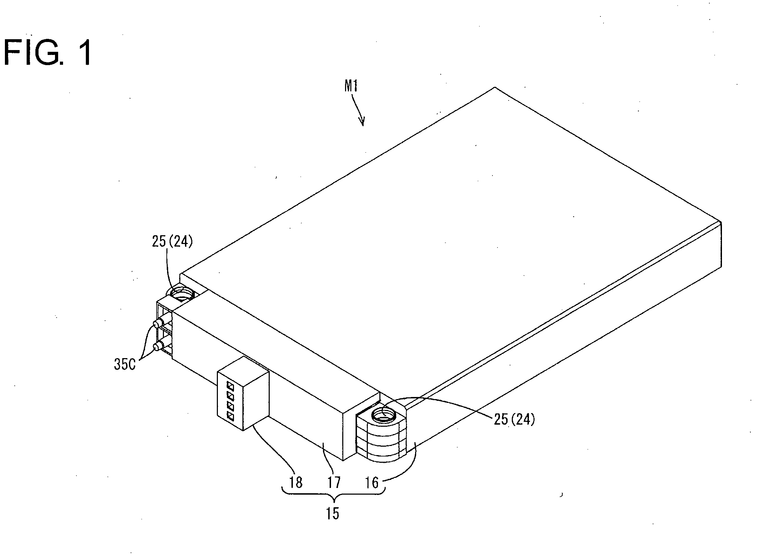

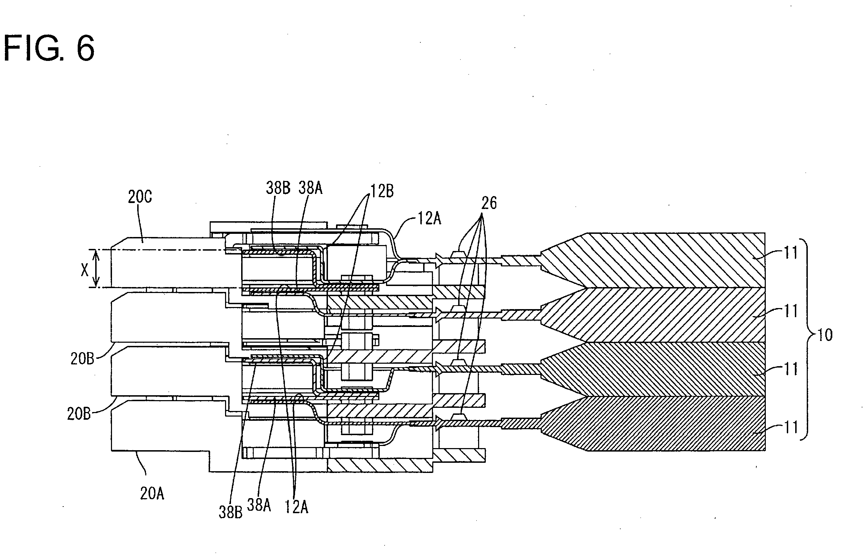

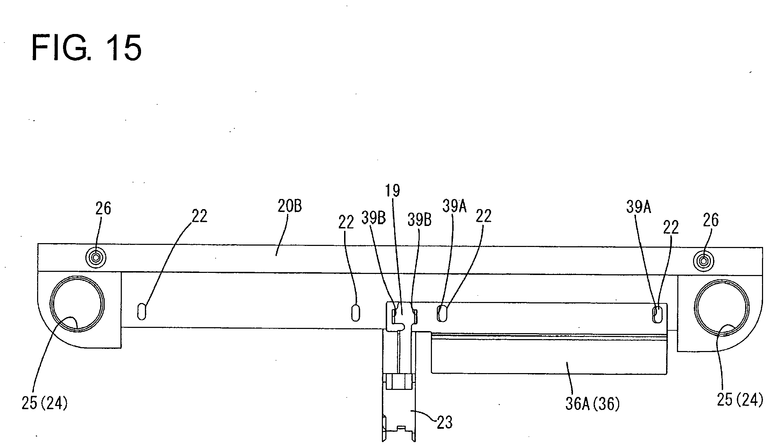

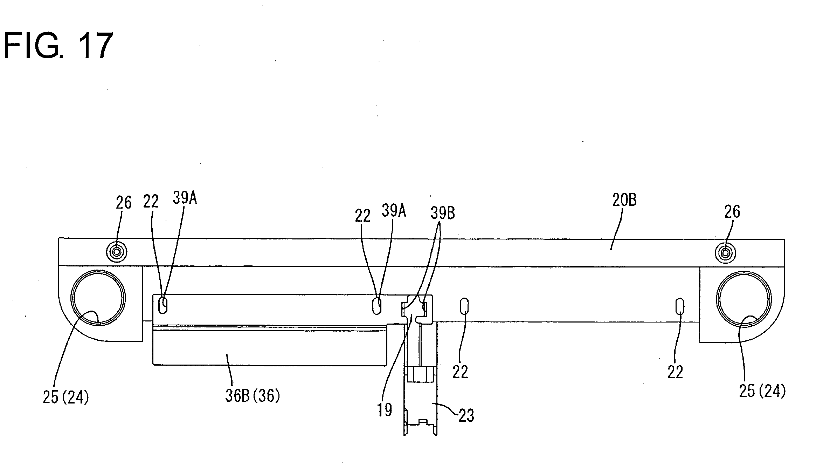

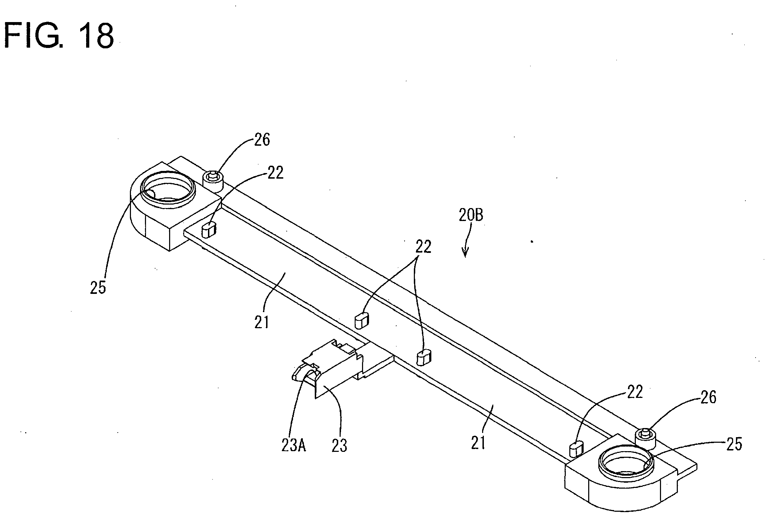

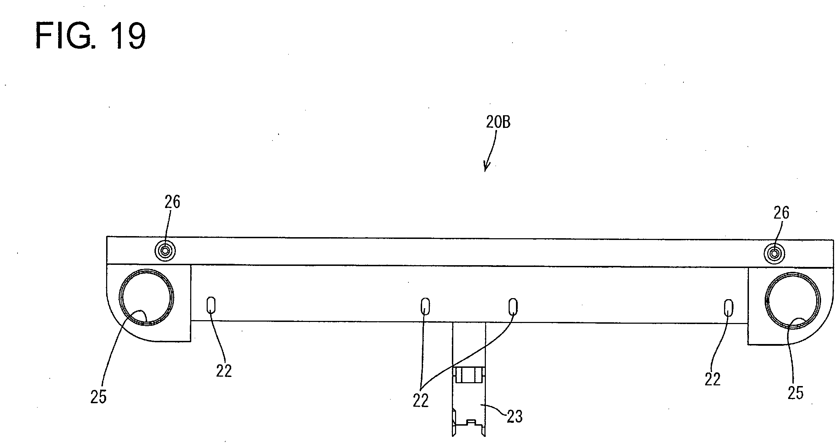

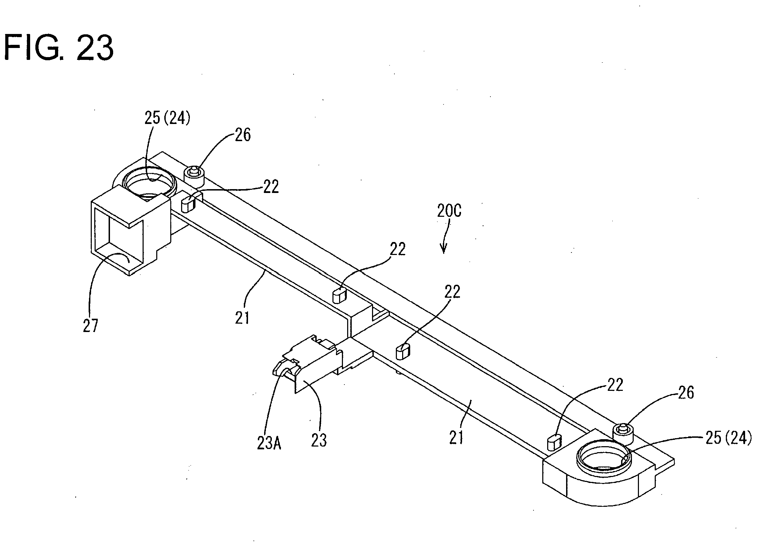

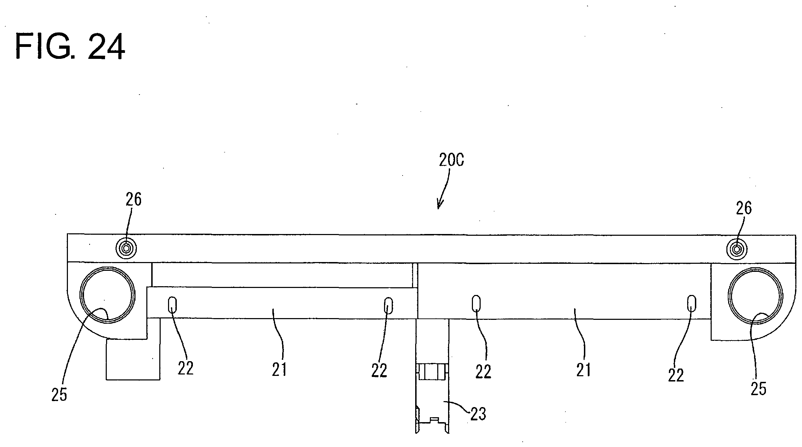

An electricity storage module M1 of one embodiment according to the present invention is described with reference to FIGS. 1 to 37. In the following description, a left lower side and a right upper side in FIG. 1 are referred to as a front side and a rear side, and an upper side and a lower side of FIG. 6 are referred to as an upper side and a lower side. For a plurality of same members, one member is denoted by a reference sign and the other members are not denoted by the reference sign in some cases. The electricity storage module M1 of this embodiment is used, for example, for an integrated starter generator (ISG).

### (Electricity Storage Module M1)

The electricity storage module M1 has a rectangular parallelepiped shape and includes an electricity storage element group 10 formed by laminating a plurality of electricity storage elements 11, connecting members 36 for connecting lead terminals 12A, 12B of the electricity storage elements 11 adjacent in a lamination direction and holding members 20 each including a connecting member holding portion 21 for holding the connecting member 36 and mounted on one side edge (front end part) of the electricity storage element 11. Further, the electricity storage module M1 includes a case 15 for accommodating the electricity storage element group 10, the connecting members 36 and the holding members 20.

### (Case 15)

The case 15 includes a case main body 16 configured to accommodate the electricity storage element group 10 and having an open front side, a holding member cover 17 for covering the holding members 20 arranged at an outer side of an opening of the case main body 16 and a housing 18 mounted on the holding member cover 17. In this embodiment, all the electricity storage elements 11 are accommodated in one case main body 16.

The holding member cover 17 covers parts except external connection terminals 35C and fixing portions 24 and terminal accommodating portions 23 formed on the holding members 20.

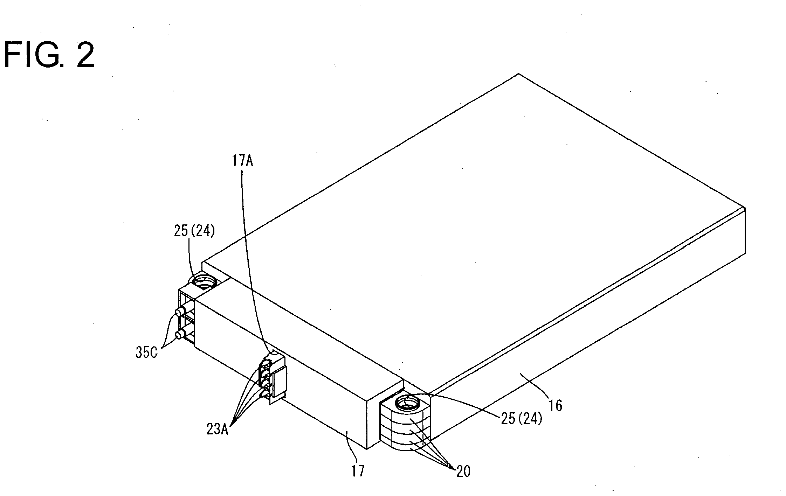

As shown in FIG. 2, an insertion portion 17A through which the terminal accommodating portions 23 provided on the holding members 20 are insertable is provided in a center of the holding member cover 17. As shown in FIG. 1, the housing 18 for covering the terminal accommodating portions 23 is mounted on the insertion portion 17A provided on the holding member cover 17.

### (Electricity Storage Element Group 10)

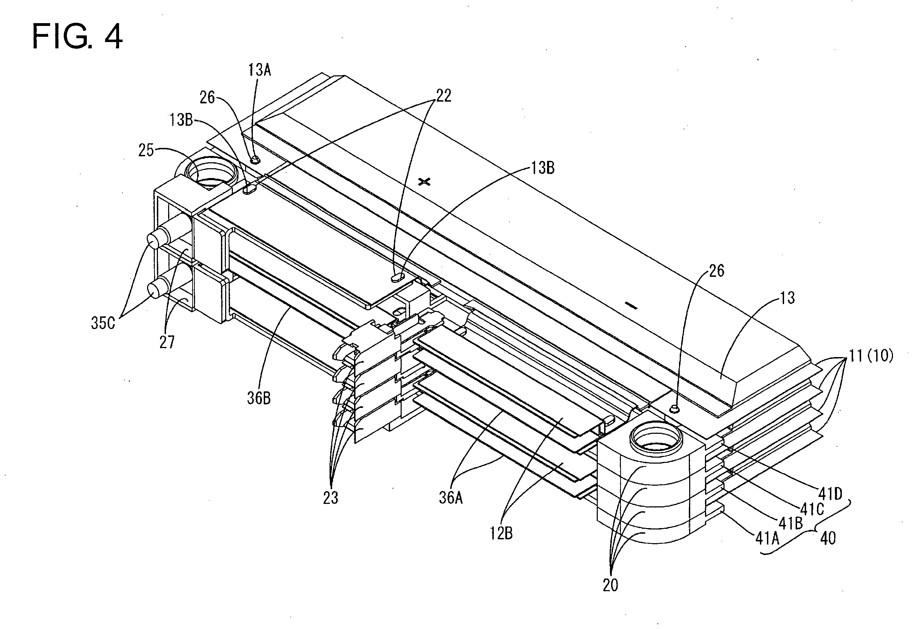

As shown in FIGS. 4 to 6, the electricity storage element group 10 is formed by laminating a plurality of electricity storage elements 11 (four electricity storage elements 11 in this embodiment). In this embodiment, the electricity storage element group 10 is formed such that the electricity storage elements 11 adjacent in the lamination direction are laminated to arrange the lead terminals 12A, 12B having different polarities at overlapping positions and are connected in series.

### (Electricity Storage Element 11)

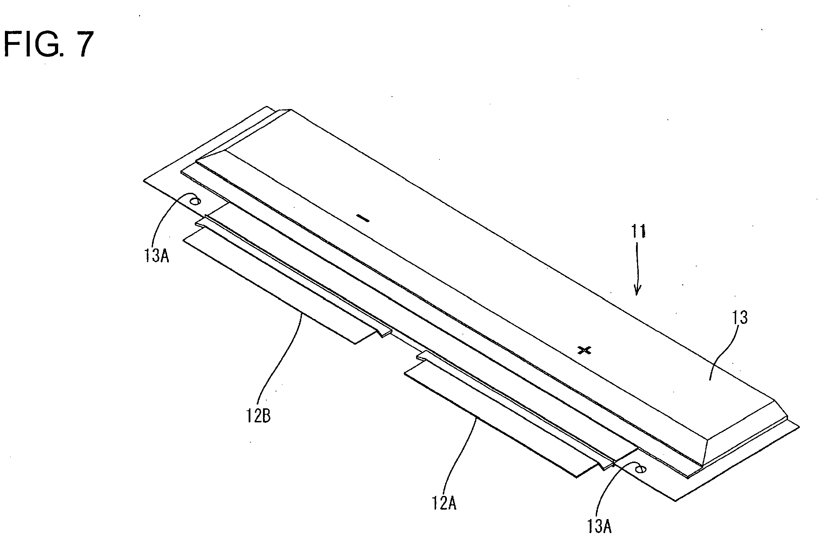

As shown in FIG. 7, each electricity storage element 11 includes a positive-electrode and a negative electrode lead terminals 12A, 12B on one side edge. Specifically, each electricity storage element 11 includes an unillustrated electricity storage part, a container 13 made of a laminate film, enclosing the electricity storage part and having welded side edges, and the lead terminals 12A, 12B connected to the electricity storage part and drawn out in an outward direction from one welded side edge of the laminate film.

In this embodiment, the positive-electrode lead terminal 12A is made of aluminum or aluminum alloy and the negative-electrode lead terminal 12B is made of copper or copper alloy.

The lead terminals 12A, 12B, having different polarities, of the electricity storage elements 11 adjacent in the lamination direction are connected via the connecting member 36. Note that the positive-electrode lead terminal 12A of the electricity storage element 11 in an uppermost stage and a negative-electrode lead terminal 12B of the electricity storage element 11 in a lowermost stage are respectively connected to external connecting members 31 to be connected to an external device (not shown). The lead terminals 12A, 12B electrically connected to the adjacent electricity storage elements 11 are respectively connected to the connecting member 36 by welding.

One side edge of the electricity storage element 11 is mounted on the holding member 20. Specifically, two circular mounting holes 13A are formed on one side edge of the electricity storage element 11 formed with the lead terminals 12A, 12B as shown in FIG. 7, and the electricity storage element 11 is mounted on the holding member 20 by fitting mounting protrusions 26 provided on the holding member 20 into these mounting holes 13A. Further, the lead terminals 12A, 12B are formed with holding holes 13B for receiving holding projections 22 of the holding member.

### (Holding Member 20)

The holding member 20 is provided with the connecting member holding portion 21 for holding at least one of the connecting member 36 and the external connecting member 31. The holding protrusions 22 to be fitted into two holding holes 33A provided on the connecting member 36 or the external connecting member 31 are formed to project on the connecting member holding portion 21. The holding protrusions 22 are also fitted into the holding holes 13B of the lead terminals 12A, 12B placed on the external connecting member 31 or the connecting member 36.

The terminal accommodating portion 23 for accommodating a terminal 19 connected to the connecting member 36 (36A, 36B) or the external connecting member 31 (31A, 31B) is formed substantially in a central part of each holding member 20. The terminal accommodating portion 23 includes an opening 23A on a front side, and a mating terminal (not shown) is inserted through this opening 23A. Note that the terminals 19 to be connected to the connecting members 36 and the external connecting members 31 are detection terminals for detecting states (e.g. voltages and temperatures) of the electricity storage elements 11.

The fixing portions 24 each formed with a circular through hole 25 are provided on opposite end parts of the holding member 20 in a longitudinal direction. The through holes 25 of the holding members 20 form holes when four holding members 20 are laminated, and fixing members (not shown) are inserted into these holes. Further, the mounting protrusions 26 for mounting the electricity storage element 11 are provided to project upward on the opposite end parts of the holding member 20 in the longitudinal direction. The mounting protrusions 26 formed on the holding member 20 are fitted into the mounting holes 13A provided on the electricity storage element 11, whereby the electricity storage element 11 is fixed.

In this embodiment, three types of the holding members 20 different in shape are used. Specifically, a first holding member 20A arranged in the lowermost stage, second holding members 20B arranged in the second and third lowest stages and a third holding member 20C arranged in the uppermost stage are used.

### (First Holding Member 20A)

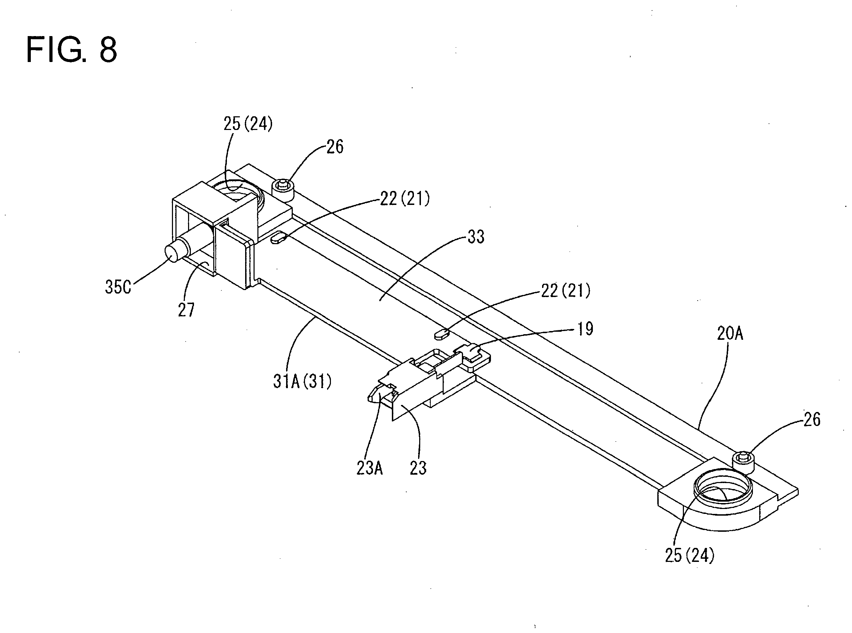

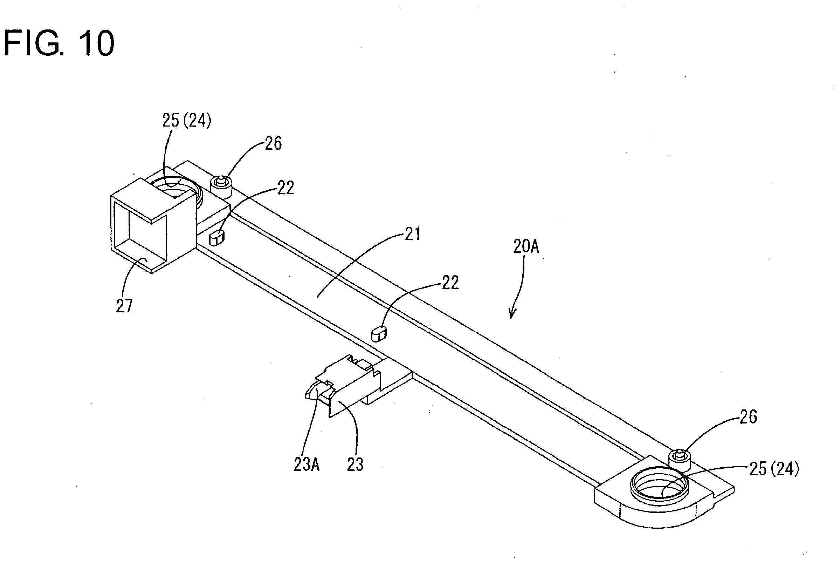

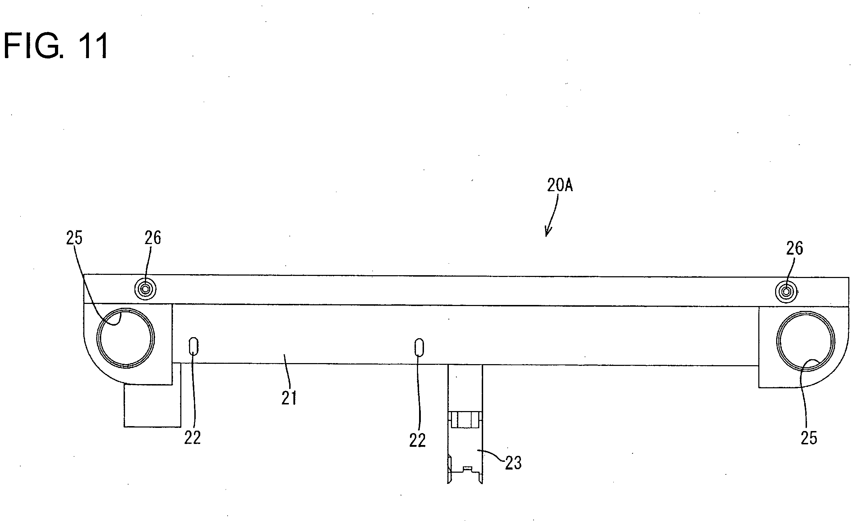

As shown in FIGS. 8, 9 and 27, the first holding member 20A is provided with the connecting member holding portion 21 for holding the external connecting member 31A on a shown left side. As shown in FIGS. 10 and 11, the first holding member 20A is provided with a rectangular terminal holding portion 27 in which the external connection terminal 35C provided on the external connecting member 31A is to be arranged.

The external connecting member 31 mounted on the first holding member 20A functions as a negative electrode of the electricity storage module M1. The external connecting member 31A functioning as a negative electrode is made of the same material (copper or copper alloy) as the negative-electrode lead terminal 12B. The external connecting member 31A is formed by joining an L-shaped first metal member 32A and a second metal member 32B formed to be stepped. The first and second metal members 32A, 32B constituting the external connecting member 31A are both made of copper or copper alloy.

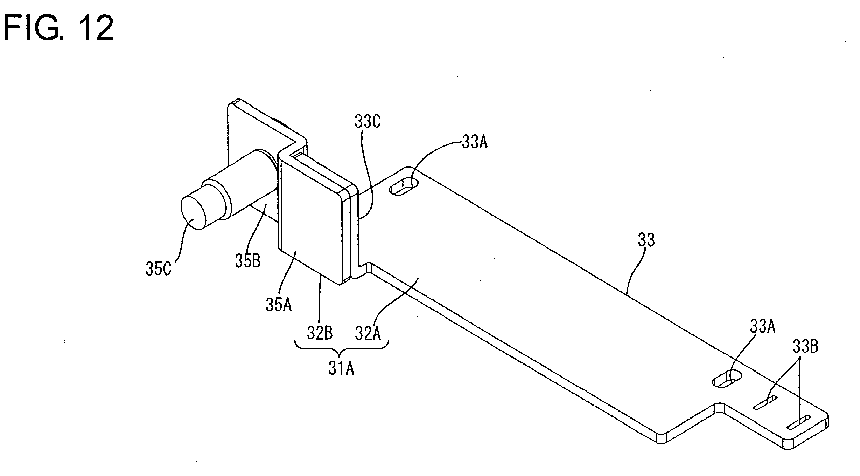

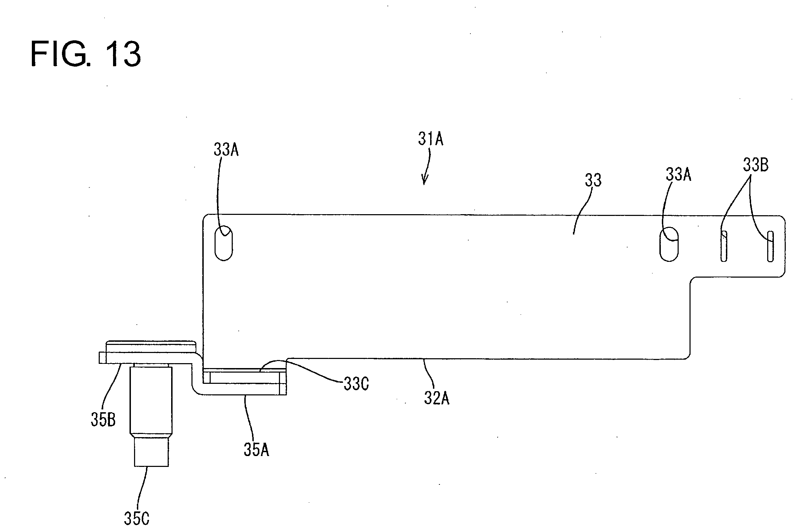

As shown in FIGS. 12 and 13, the first metal member 32A includes a held portion 33 in the form of a flat plate, connected to the negative-electrode lead terminal 12B of the electricity storage element 11 and held on the holding member 20, and a wall portion 33C connected to the held portion 33 and erected substantially perpendicularly to the held portion 33. The second metal member 32B includes a joint portion 35A to be joined to the wall portion 33C and a terminal portion 35B formed with the external connection terminal 35C in the form of a bolt. The external connection terminal 35C is a terminal to be electrically connected to the external device.

Two holding holes 33A for receiving the holding protrusions 22 of the first holding member 20A and two terminal connection holes 33B to be connected to the terminal 19 to be accommodated into the terminal accommodating portion 23 are provided to penetrate through the held portion 33 of the external connecting member 31A.

### (Second Holding Member 20B)

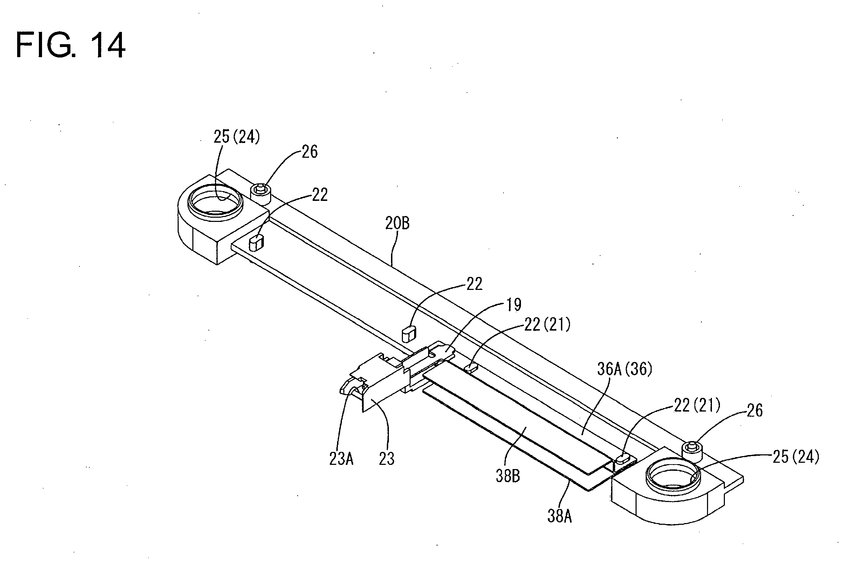

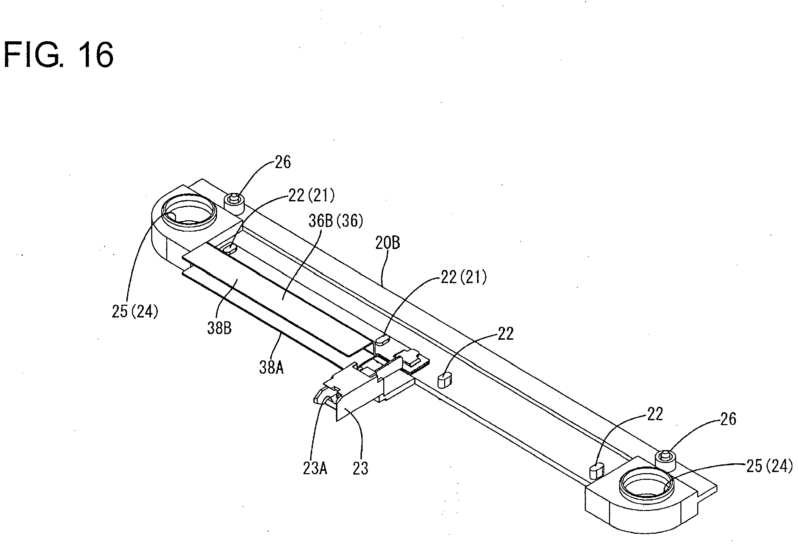

As shown in FIGS. 14 to 19, each second holding member 20B is provided with two connecting member holding portions 21 for holding the connecting member 36. On the second holding member 20B arranged in the second lowest stage, the connecting member 36 (36A) is held on the connecting member holding portion 21 on a shown right side as shown in FIGS. 14, 15 and 29. Further, on the second holding member 20B arranged in the third lowest stage, the connecting member 36 (36B) is held on the connecting member holding portion 21 on a shown left side as shown in FIGS. 16, 17 and 33.

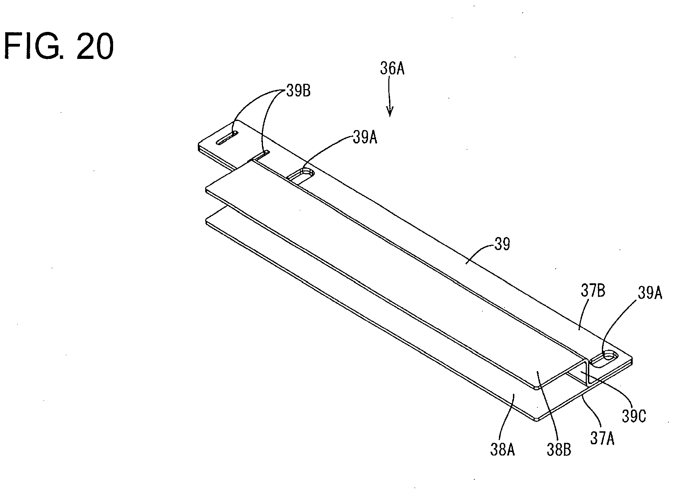

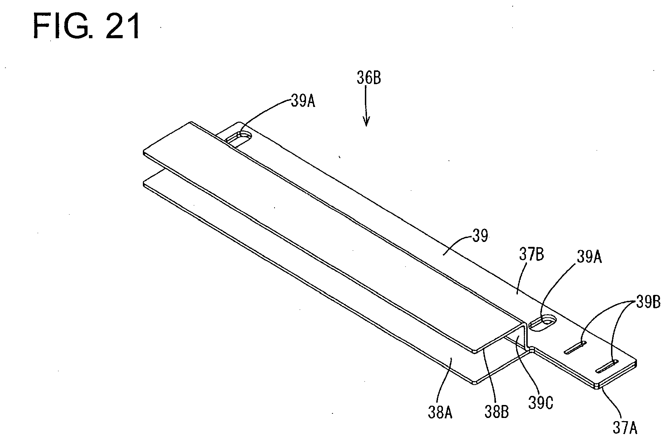

Here, the connecting member 36 to be held on the second holding member 20B arranged in the second lowest stage is referred to as a first connecting member 36A (FIG. 20) and the connecting member 36 to be held on the second holding member 20B arranged in the third lowest stage is referred to as a second connecting member 36B (FIG. 21). Each connecting member 36A, 36B (first and second connecting members 36A, 36B) includes terminal connecting portions 38A, 38B bent into a U shape and connected to the lead terminal 12A, 12B on a front side and a held portion 39 in the form of a flat plate to be held on the second holding member 20B on a rear side.

Further, each connecting member 36A, 36B is formed by joining two metal members (first metal member 37A, second metal member 37B). The first metal member 37A arranged below out of the two metal members 37A, 37B is in the form of a flat plate and includes the held portion 39 formed with two holding holes 39A and two terminal connection holes 39B and the terminal connecting portion 38A to be connected to the lead terminal 12A of the electricity storage element 11 arranged below. The second metal member 37B arranged above includes the held portion 39 formed with two holding holes 39A and two terminal connection holes 39B, an erected wall 39C connected to the held portion 39 and erected substantially perpendicularly to the held portion 39 and the terminal connecting portion 38B bent substantially perpendicularly to the erected wall 39C and to be connected to the lead terminal 12B of the electricity storage element 11 arranged above.

On each connecting member 36A, 36B, two terminal connecting portions 38A, 38B are separated by a height X (see FIG. 6) of the erected wall 39. Thus, in laser-welding the terminal connecting portion 38A and the lead terminal 12A and in laser-welding the terminal connecting portion 38B and the lead terminal 12B, welding can be precisely performed.

The first metal member 37A constituting each connecting member 36A, 36B is made of the same material (aluminum or aluminum alloy) as the positive-electrode lead terminal 12A and the second metal member 37B is made of the same material (copper or copper alloy) as the negative-electrode lead terminal 12B. Thus, out of the two terminal connecting portions 38A, 38B of each connecting member 36A, 36B, the lower terminal connecting portion 38A is made of aluminum or aluminum alloy and the upper terminal connecting portion 38B is made of copper or copper alloy.

The held portion 39 of the first metal member 37A and that of the second metal member 37B overlap in the entire area and the two holding holes 39A and the two terminal connection holes 39B also respectively overlap each other.

### (Third Holding Member 20C)

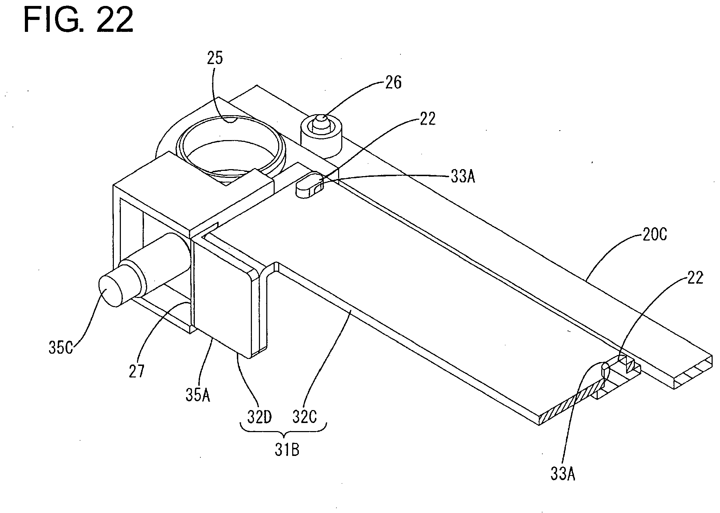

As shown in FIGS. 22 to 24 and 37, the third holding member 20C is provided with the connecting member holding portions 21 for holding the external connecting member 31B on a shown left side and a connecting member holding portion 21 for holding the first connecting member 36A on a shown right side, the connecting member holding portions 21 being connected via a step. The third holding member 20C is provided with a rectangular terminal holding portion 27 in which the external connection terminal 35C provided on the external connecting member 31B is to be arranged.

The external connecting member 31B mounted on the third holding member 20C functions as a positive electrode of the electricity storage module M1. The external connecting member 31B functioning as a positive electrode is made of the same material (aluminum or aluminum alloy) as the positive-electrode lead terminal 12A. The external connecting member 31B is formed by joining an L-shaped first metal member 32C and a second metal member 32D formed to be stepped. The first and second metal members 32C, 32D constituting the external connecting member 31B are both made of aluminum or aluminum alloy.

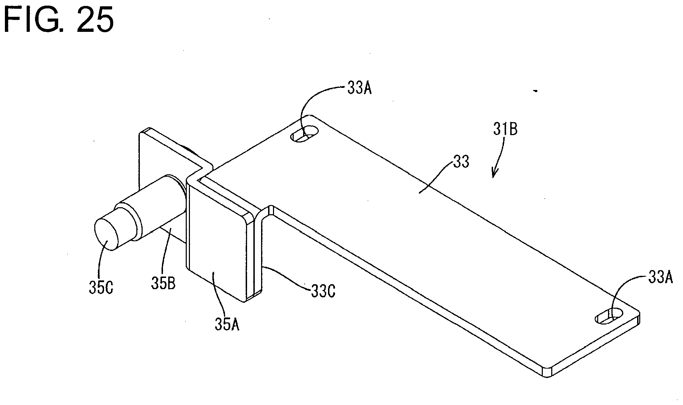

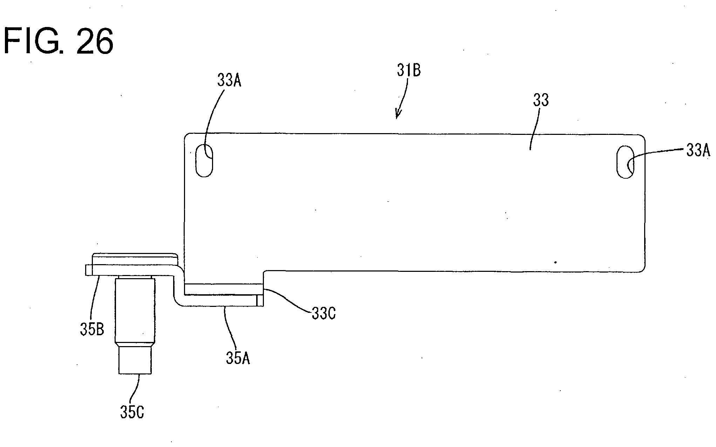

As shown in FIGS. 25 and 26, the first metal member 32C includes a held portion 33 in the form of a flat plate, connected to the positive-electrode lead terminal 12A of the electricity storage element 11 and held on the third holding member 20C, and a wall portion 33C connected to the held portion 33 and hanging down substantially perpendicularly to the held portion 33. The second metal member 32D includes a joint portion 35A to be joined to the wall portion 33C and a terminal portion 35B formed with the external connection terminal 35C in the form of a bolt. The external connection terminal 35C is a terminal to be electrically connected to the external device.

Two holding holes 33A for receiving the holding protrusions 22 of the third holding member 20C are provided to penetrate through the held portion 33 of the external connecting member 31B. Note that the first connecting member 36A held on the third holding member 20C has the same configuration as the first connecting member 36A held on the second holding member 20B.

### (Assembling Method of Electricity Storage Module M1)

Metal materials are pressed to fabricate the first metal members 32A, 32C, the second metal members 32B, 32D and the first and second metal members 37A, 37B, these are joined to fabricate each external connecting member 31A, 31B, two first connecting members 36A and the second connecting member 36B. The terminals 19 are mounted into the terminal connection holes 38B of the external connecting member 31A, the first connecting members 36A and the second connecting member 36B.

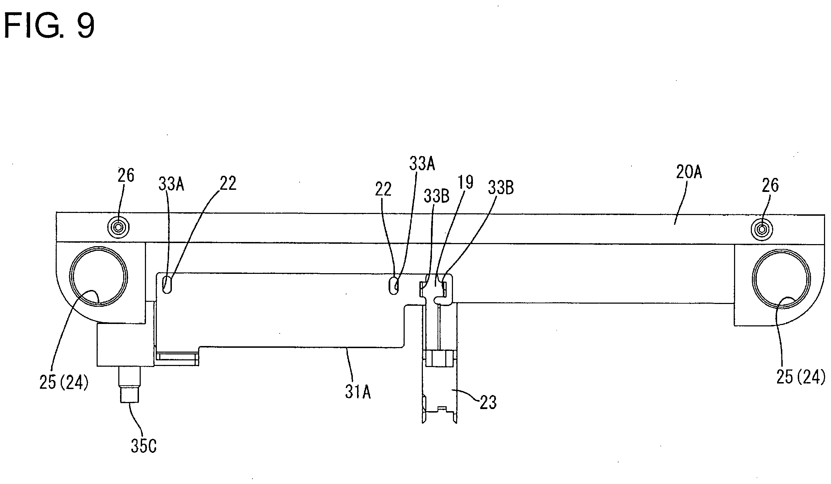

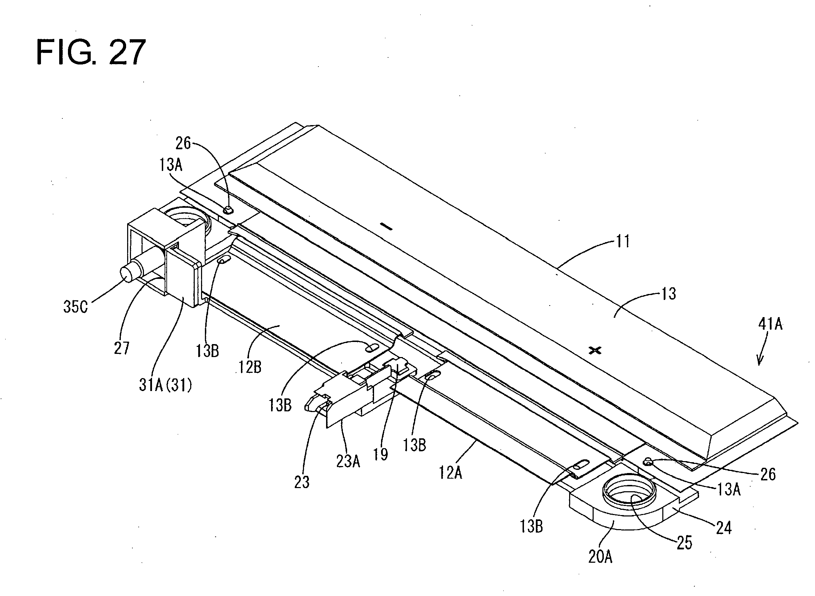

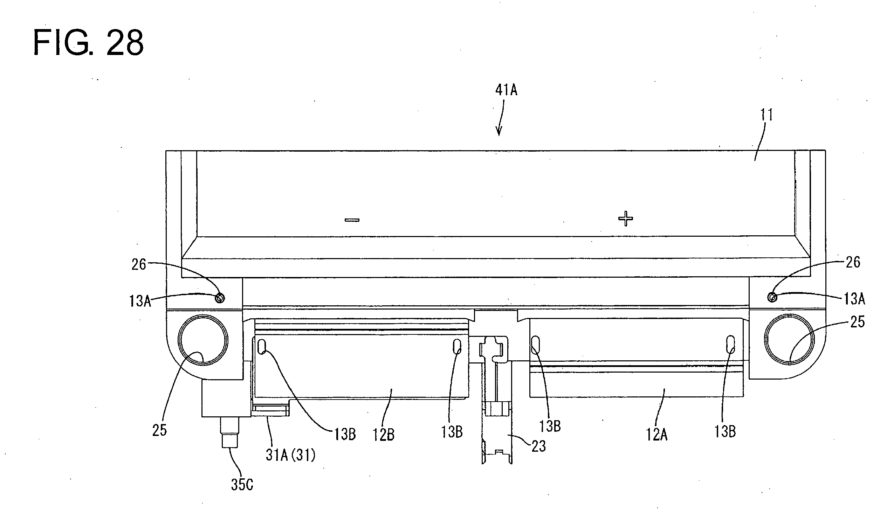

Subsequently, the holding protrusions 22 of the first holding member 20A are fitted into the holding holes 33A of the external connecting member 31A and the terminal portion 35B of the external connecting member 31A is fitted into the terminal holding portion 27 of the first holding member 20A, whereby the external connecting member 31A is mounted on the first holding member 20A (see FIGS. 8 and 9). Thereafter, the mounting protrusions 26 of the first holding member 20A are fitted into the mounting holes 13A of the electricity storage element 11 and the holding protrusions 22 of the first holding member 20A are fitted into the holding holes 13B of the lead terminal 12B, whereby an electricity storage unit 41A in the lowermost stage shown in FIGS. 27 and 28 is obtained.

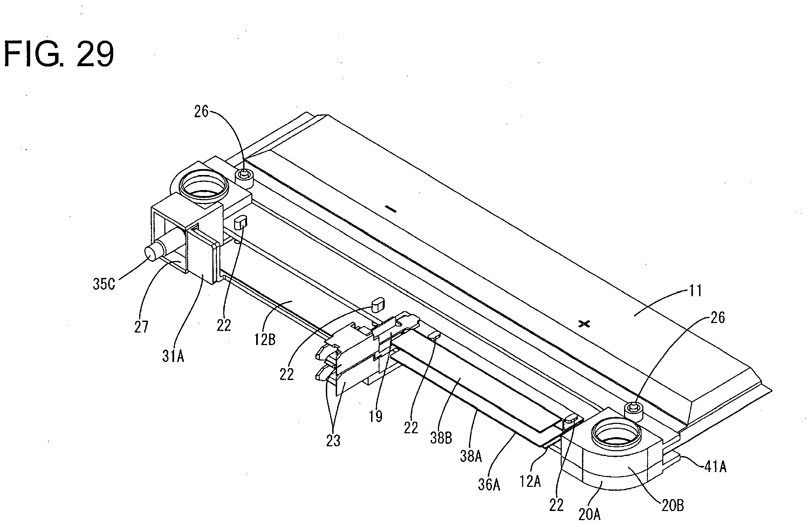

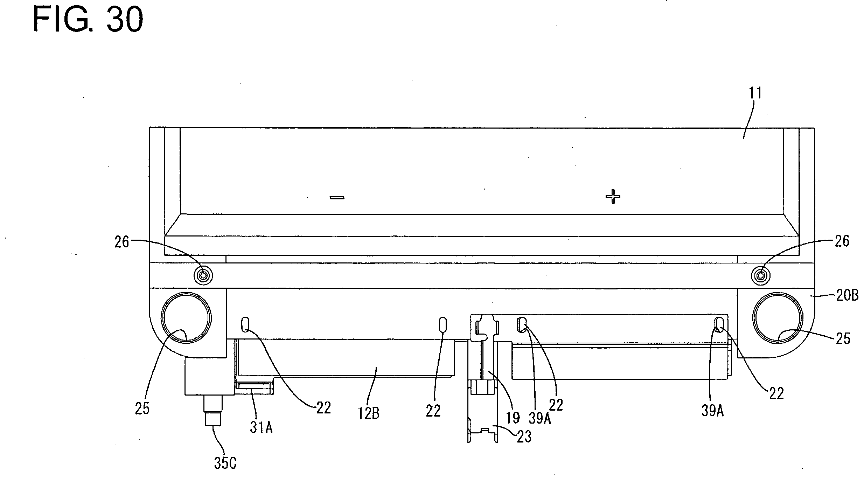

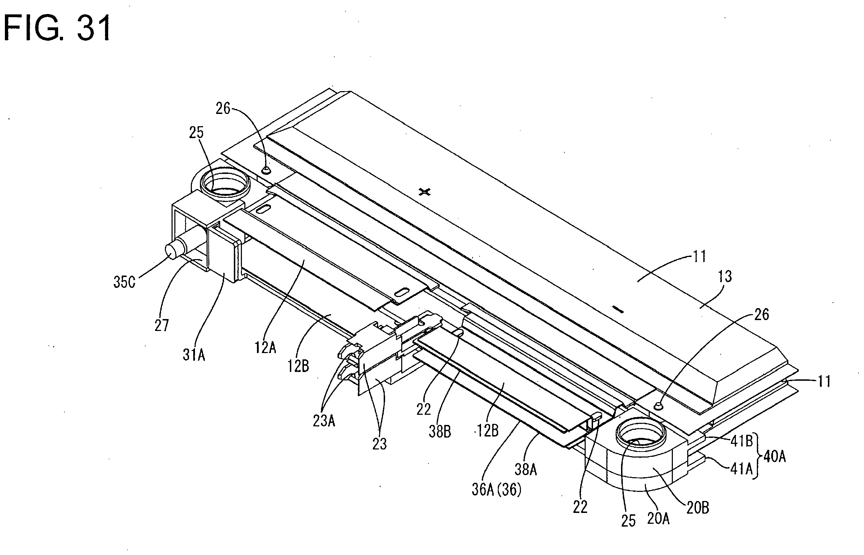

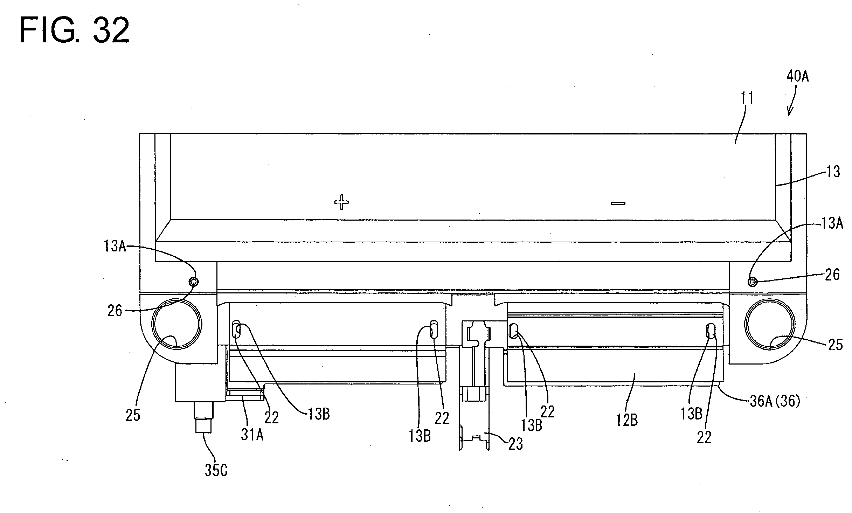

When the holding protrusions 22 of the second holding member 20B are fitted into the holding holes 39A of the first connecting member 36A, the first connecting member 36A is mounted on the second holding member 20B arranged in the second lowest stage and the second holding member 20B is placed (laminated) on the electricity storage unit 41A in the lowermost stage, a state shown in FIGS. 29 and 30 is obtained. Subsequently, when the mounting protrusions 26 of the second holding member 20B are fitted into the mounting holes 13A of the electricity storage element 11 and the holding protrusions 22 of the second holding member 20B are fitted into the holding holes 13B of the lead terminal 12B, thereby laminating an electricity storage unit 41B in the second lowest stage on the electricity storage unit 41A in the lowermost stage, a laminated body 40A shown in FIGS. 31 and 32 is obtained.

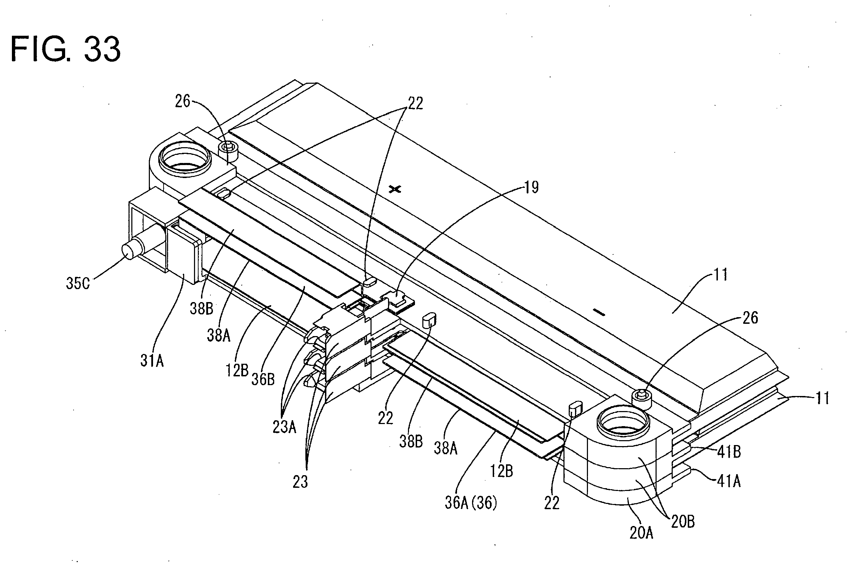

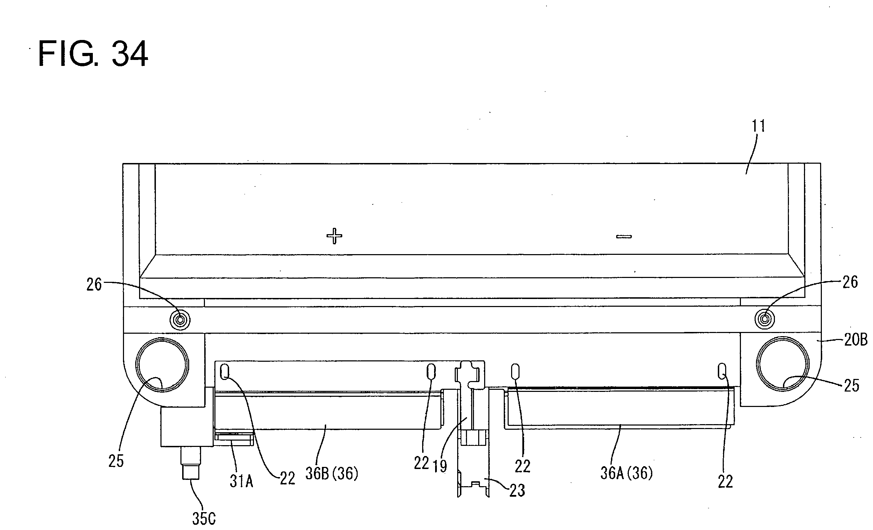

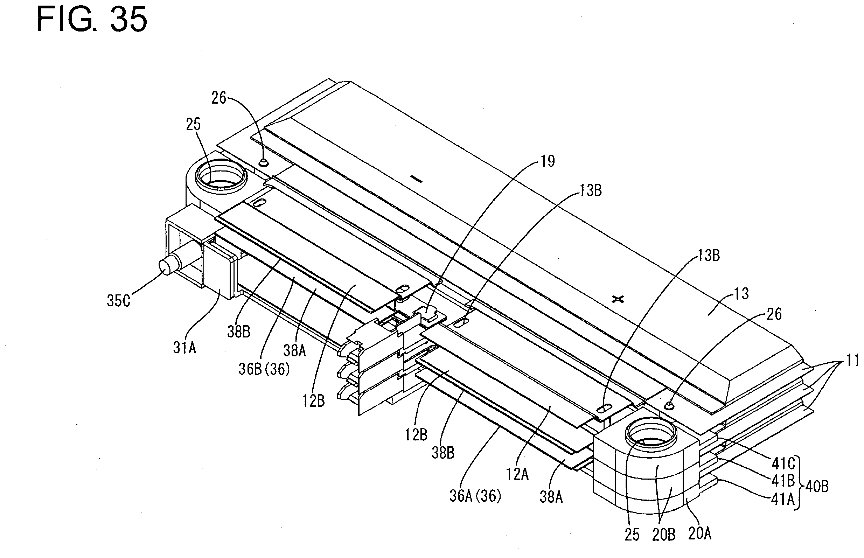

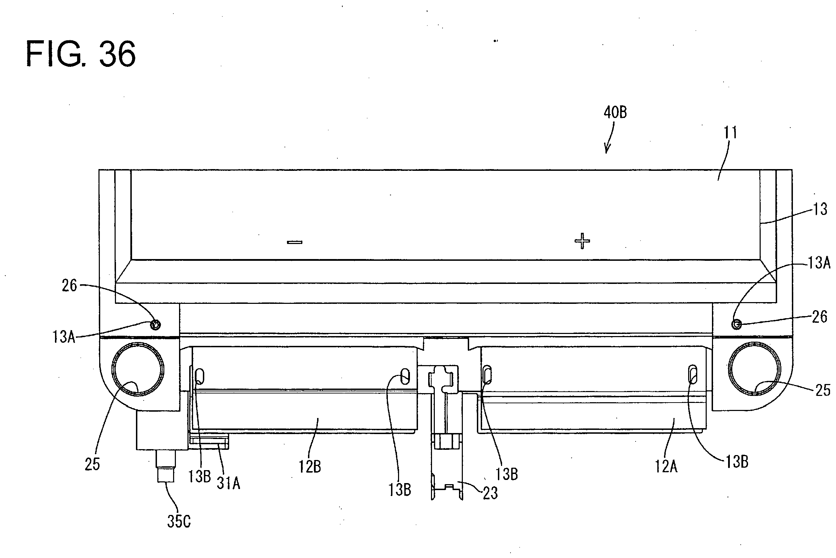

When the holding protrusions 22 of the second holding member 20B are fitted into the holding holes 39A of the second connecting member 36B, the second connecting member 36B is mounted on the second holding member 20B arranged in the third lowest stage and the second holding member 20B is placed (laminated) on the electricity storage unit 41B in the second lowest stage, a state shown in FIGS. 33 and 34 is obtained. Subsequently, when the mounting protrusions 26 of the second holding member 20B are fitted into the mounting holes 13A of the electricity storage element 11, thereby laminating an electricity storage unit 41C in the third lowest stage on the electricity storage unit 41B in the second lowest stage, a laminated body 40B shown in FIGS. 35 and 36 is obtained.

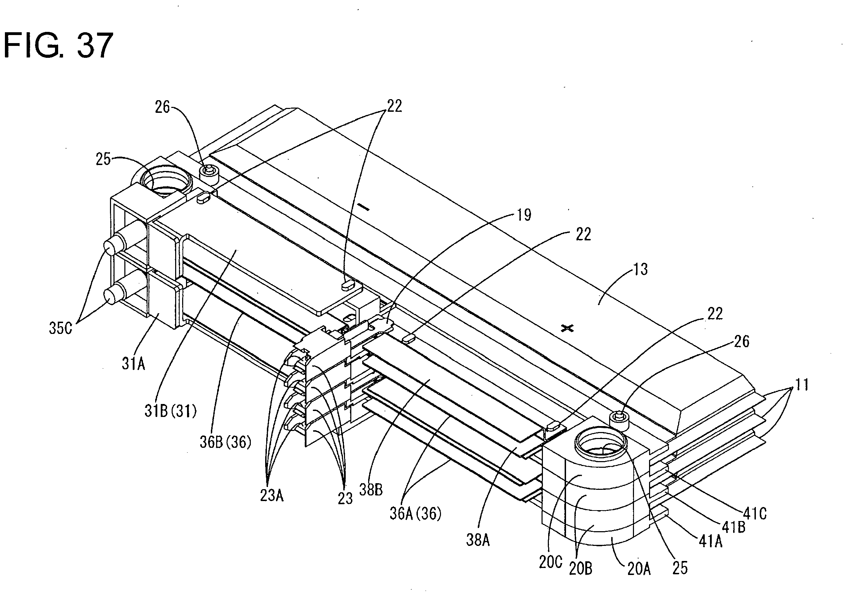

The holding protrusions 22 of the third holding member 20C are fitted into the holding holes 33A of the external connecting member 31B and the terminal portion 35B of the external connecting member 31B is fitted into the terminal holding portion 27 of the third holding member 20C, whereby the external connecting member 31B is mounted on the third holding member 20C (see FIG. 22). Further, when the holding protrusions 22 of the third holding member 20C are fitted into the holding holes 39A of the first connecting member 36A and the third holding member 20C is placed (laminated) on the electricity storage unit 41C in the third lowest stage, a state as shown in FIG. 37 is obtained. Subsequently, when the mounting protrusions 26 of the third holding member 20C are fitted into the mounting holes 13A of the electricity storage element 11, the holding protrusions 22 of the third holding member 20C are fitted into the holding holes 13B of the lead terminal 12B and the electricity storage unit 41D in the uppermost stage is laminated on the electricity storage unit 41C in the third lowest stage, a laminated body 40 shown in FIG. 4 is obtained.

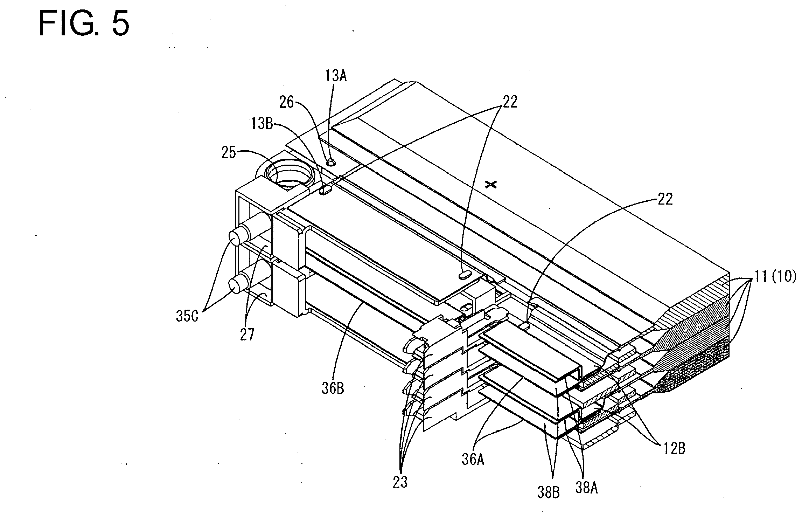

In the laminated body 40, as shown in FIGS. 5 and 6, the first metal member 37A of the first connecting member 36A is in contact with the positive-electrode lead terminal 12A of the electricity storage element 11 arranged below and the second metal member 37B of the first connecting member 36A is in contact with the negative-electrode lead terminal 12B of the electricity storage element 11 arranged above. The first metal member 37A of the second connecting member 36B is in contact with the positive-electrode lead terminal 12A of the electricity storage element 11 arranged below and the second metal member 37B of the second connecting member 36B is in contact with the negative-electrode lead terminal 12B of the electricity storage element 11 arranged above. The external connecting member 31A held on the first holding member 20A is in contact with the negative-electrode lead terminal 12B and the external connecting member 31B held on the third holding member 20C is in contact with the positive-electrode lead terminal 12A.

That is, each lead terminal 12A, 12B is in contact with the connecting member 36 or the external connecting member 31 made of the same material. In the laminated body 40, the four terminal accommodating portions 23 are arranged in a row in a vertical direction (lamination direction).

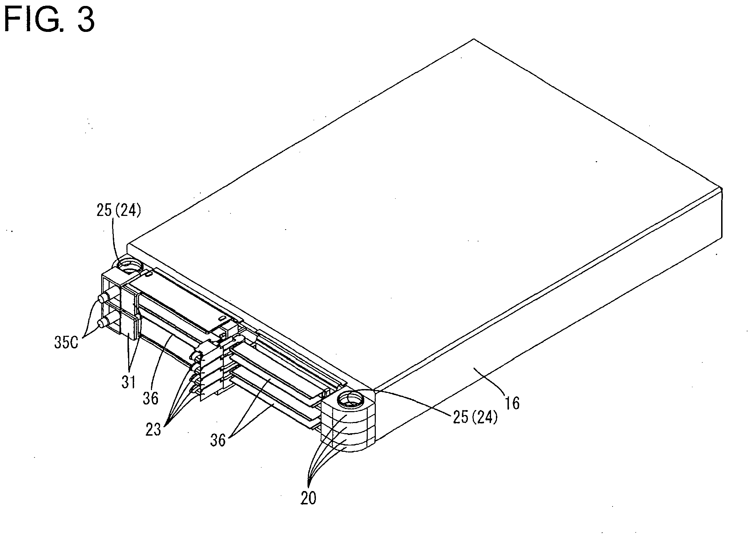

Subsequently, when the laminated body 40 is accommodated into the case main body 16, the electricity storage element group 10 is accommodated in the case main body 16 and the holding members 20 are partially exposed to outside as shown in FIG. 3. Subsequently, when the holding member cover 17 is mounted, the terminal accommodating portions 23 are arranged to project outwardly from the insertion portion 17A formed on the holding member cover 17 as shown in FIG. 2. Further, when the housing 18 is mounted to cover the terminal accommodating portions 23 arranged in a row, the electricity storage module M1 shown in FIG. 1 is obtained.

### (Functions and Effects of Embodiment)

According to this embodiment, the connecting member 36 for connecting the lead terminals 12A, 12B of the electricity storage elements 11 adjacent in the lamination direction is held on the connecting member holding portion 21 of the holding member 20 mounted on one side edge of the electricity storage element 11. Thus, according to this embodiment, the electricity storage module M1 is obtained by laminating the electricity storage elements 11 each mounted with the holding member 20 and connecting the lead terminals 12A, 12B of the electricity storage elements 11 and the connecting members 36 such as by welding. Therefore, a connecting operation can be simplified.

Further, since one electricity storage module M1 can be configured by laminating a necessary number of electricity storage elements 11 according to this embodiment, one case 15 can accommodate this electricity storage module M1 and a mounting space can be reduced because the number of cases is smaller than an electricity storage module M1 in which electricity storage elements 11 are accommodated in a plurality of cases.

As a result, according to this embodiment, it is possible to provide the electricity storage module M1 with a reduced space and a simplified connecting operation.

Further, since a part (terminal connecting portion 38A, 38B) of the connecting member 36 to be held in contact with the lead terminal 12A, 12B is made of the same material as the lead terminal 12A, 12B according to this embodiment, various welding methods can be adopted as a method for connecting the lead terminal 12A, 12B and the connecting member 36 and, in addition, electrical connection reliability can be enhanced by suppressing the occurrence of electrolytic corrosion in a connecting part of the lead terminal 12A, 12B and the connecting member 36.

### <Other Embodiments>

The present invention is not limited to the above described and illustrated embodiment. For example, the following embodiments are also included in the technical scope of the present invention.
(1) Although a member formed by joining the first metal member 37A and the second metal member 37B is shown as the connecting member 36 in the above embodiment, the connecting member 36 may be composed of one member.
(2) Although a member formed by joining the first metal member 32A (32C) and the second metal member 32B (32D) is shown as the external connecting member 31A (31B) in the above embodiment, the external connecting member 31A (31B) may be composed of one member.
(3) Although the two metal members constituting the external connecting member 31 are made of the same material in the above embodiment, the two metal members may be made of different materials.
(4) Although the electricity storage element group 10 formed by laminating four electricity storage elements 11 is shown in the above embodiment, the electricity storage element group 10 has only to be formed by laminating a plurality of electricity storage elements and may be formed by laminating two, three, five or more electricity storage elements.
(5) Although the holding member 20 formed with the terminal holding portion 27 is shown in the above embodiment, the terminal holding portion 27 may not be provided.
(6) Although the detection terminals 19 are mounted on the connecting members 36A, 36B and the external connecting members 31A in the above embodiment, detection terminals may be connected to the lead terminals other than the connecting members and the external connecting members.

### List of Reference Signs

- 10: electricity storage element group
- 11: electricity storage element
- 12A: positive-electrode lead terminal
- 12B: negative-electrode lead terminal
- 13: container
- 15: case
- 20: holding member
- 20A: first holding member
- 20B: second holding member
- 20C: third holding member
- 21: connecting member holding portion
- 31: external connecting member
- 31A: external connecting member
- 31B: external connecting member
- 33: held portion
- 33A: holding hole
- 36: connecting member
- 36A: first connecting member
- 36B: second connecting member
- 37A: first metal member
- 37B: second metal member
- 38A, 38B: terminal connecting portion
- 39: held portion
- 39A: holding hole
- 40: laminated body
- 41A: electricity storage unit in lowermost stage
- 41B: electricity storage unit in second lowest stage
- 41C: electricity storage unit in third lowest stage
- 41D: electricity storage unit in uppermost stage
- M1: electricity storage module

## Claims

1. An electricity storage module (M1), comprising:
an electricity storage element group (10) formed by laminating a plurality of electricity storage elements (11) each including a positive-electrode and a negative-electrode lead terminals (12A, 12B) projecting in an outward direction from one side edge and a container (13) made of a laminate film and configured to accommodate an electricity storage part connected to the lead terminals (12A, 12B);
connecting members (36A, 36B) configured to connect the lead terminals (12A, 12B) of the electricity storage elements (11) adjacent in a lamination direction; and
holding members (20) each including a connecting member holding portion (21) configured to hold the connecting member (36A, 36B) and mounted on the one side edge of the electricity storage element (11),
wherein
the holding members (20) are laminated,
a part of the connecting member (36A, 36B) held in contact with the lead terminal (12A, 12B) is made of the same material as the lead terminal (12A, 12B),
**characterized in that**
each of the connecting members (36A, 36B) is formed by joining a first metal member (37A) and a second metal member (37B),
the first metal member (37A) is in contact with a positive-electrode lead terminal (12A) and made of the same material as the positive-electrode lead terminal (12A) which is aluminum or aluminum alloy, and
the second metal member (37B) is in contact with a negative-electrode lead terminal (12B) and made of the same material as the negative-electrode lead terminal (12B) which is copper or copper alloy.

## Patentansprüche

1. Elektrizitätsspeichermodul (M1), umfassend:
eine Elektrizitätsspeicherelementegruppe (10), die durch Laminieren einer Mehrzahl von Elektrizitätsspeicherelementen (11) gebildet ist, die jeweils eine Positive-Elektrode und eine Negative-Elektrode-Leitungsanschlüsse (12A, 12B), die in einer Auswärtsrichtung von einer Seitenkante vorstehen, und einen Behälter (13) enthalten, der aus einem Laminatfilm besteht und konfiguriert ist, einen Elektrizitätsspeicherteil aufzunehmen, der mit den Leitungsanschlüssen (12A, 12B) verbunden ist;
Verbindungsglieder (36A, 36B), die konfiguriert sind, die Leitungsanschlüsse (12A, 12B) der Elektrizitätsspeicherelemente (11) benachbart bzw. angrenzend in einer Laminierungsrichtung zu verbinden; und
Halteglieder (20), die jeweils einen Verbindungsgliedhalteabschnitt (21) enthalten, der konfiguriert ist, das Verbindungsglied (36A, 36B) zu halten, und an der einen Seitenkante des Elektrizitätsspeicherelements (11) montiert sind,
wobei
die Halteglieder (20) laminiert sind,
ein Teil des Verbindungsglieds (36A, 36B), das mit dem Leitungsanschluss (12A, 12B) in Kontakt gehalten ist, aus dem gleichen Material besteht wie der Leitungsanschluss (12A, 12B),
**dadurch gekennzeichnet, dass**
jedes der Verbindungsglieder (36A, 36B) durch Verbinden eines ersten Metallglieds (37A) und eines zweiten Metallglieds (37B) gebildet wird,
das erste Metallglied (37A) mit einem Positive-Elektrode-Leitungsanschluss (12A) in Kontakt ist und aus dem gleichen Material besteht wie der Positive-Elektrode-Leitungsanschluss (12A), der Aluminium oder eine Aluminiumlegierung ist, und
das zweite Metallglied (37B) mit einem Negative-Elektrode-Leitungsanschluss (12B) in Kontakt ist und aus dem gleichen Material besteht wie der Negative-Elektrode-Leitungsanschluss (12B), der Kupfer oder eine Kupferlegierung ist.

## Revendications

1. Module de stockage d'électricité (M1) comprenant :
un groupe d'éléments de stockage d'électricité (10) formé en stratifiant une pluralité d'éléments de stockage d'électricité (11) incluant chacun des bornes de sortie à électrode positive et à électrode négative (12A, 12B) faisant saillie dans une direction extérieure depuis un bord latéral et un récipient (13) réalisé en un film stratifié et configuré pour héberger une partie de stockage d'électricité connectée aux bornes de sortie (12A, 12B) ;
des éléments de connexion (36A, 36B) configurés pour connecter les bornes de sortie (12A, 12B) des éléments de stockage d'électricité (11) adjacentes dans une direction de stratification ; et
des éléments de maintien (20) incluant chacun une portion de maintien d'élément de connexion (21) configurée pour maintenir l'élément de connexion (36A, 36B) et montée sur le bord latéral en question de l'élément de stockage d'électricité (11),
dans lequel
les éléments de maintien (20) sont stratifiés,
une partie de l'élément de connexion (36A, 36B) maintenue en contact avec la borne de sortie (12A, 12B) est réalisée en le même matériau que la borne de sortie (12A, 12B),
**caractérisé en ce que**
chacun des éléments de connexion (36A, 36B) est formé en reliant un premier élément métallique (37A) et un second élément métallique (37B),
le premier élément métallique (37A) est en contact avec une borne de sortie à électrode positive (12A) et réalisé en le même matériau que la borne de sortie à électrode positive (12A) qui est l'aluminium ou un alliage d'aluminium, et
le second élément métallique (37B) est en contact avec une borne de sortie à électrode négative (12B) et réalisé en le même matériau que la borne de sortie à électrode négative (12B) qui est le cuivre ou un alliage de cuivre.
